# EUROPÄISCHE PATENTSCHRIFT

(11) **EP 3 683 893 B1**
(45) Veröffentlichungstag und Bekanntmachung des Hinweises auf die Patenterteilung: **08.06.2022**
(21) Anmeldenummer: 19152015.4
(22) Anmeldetag: 16.01.2019
(51) Int. Cl.: H01R 9/24, H01R 13/58, H02G 3/22, H01R 13/52

(54) **ELEKTRISCHES BAUTEIL,VERFAHREN ZU SEINER HERSTELLUNG, UND TRAGESTRUKTUR**
ELECTRICAL COMPONENT, ITS MANUFACTURING PROCESS, AND SUPPORT STRUCTURE
COMPOSANT ÉLECTRIQUE, PROCÉDÉ POUR SA FABRICATION, ET STRUCTURE DE SUPPORT

(43) Veröffentlichungstag der Anmeldung: 22.07.2020
(73) Patentinhaber: Werner Wirth GmbH, 22525 Hamburg (DE)
(72) Erfinder: Höppner, Sven, 22525 Hamburg (DE)
(74) Vertreter: Glawe, Delfs, Moll

(56) Entgegenhaltungen:
- EP-A1- 2 978 077
- WO-A1-94/09533
- WO-A1-99/62144

## Beschreibung

Die Erfindung betrifft ein elektrisches Bauteil mit einem Gehäuse, wobei das Gehäuse eine erste Austrittsöffnung und eine zweite Austrittsöffnung aufweist, und ein Verfahren zu seiner Herstellung. . Durch die erste Austrittsöffnung hindurch erstreckt sich ein erstes Kabel aus dem Innenraum nach außen. Durch die zweite Austrittsöffnung hindurch erstreckt sich ein zweites Kabel aus dem Innenraum nach außen. Die Erfindung betrifft außerdem ein Verfahren zum Herstellen eines elektrischen Bauteils.

Elektrische Bauteile werden häufig mit einer Tragestruktur verbunden, die das elektrische Bauteil trägt. In der Tragestruktur kann eine Öffnung ausgebildet sein, in die das elektrische Bauteil in einer Einführrichtung eingesetzt wird. Eine Umfangsfläche des Gehäuses ist dann in Richtung der Innenwand der Öffnung ausgerichtet.

Beim Einführen eines solchen elektrischen Bauteils in die Öffnung der Tragestruktur soll in vielen Fällen auch das aus dem Gehäuse des elektrischen Bauteils herausgeführte Kabel durch die Öffnung hindurchgeführt werden. Ist das elektrische Bauteil so gestaltet, dass die Kabel in Umfangsrichtung aus dem Gehäuse des elektrischen Bauteils herausragen, so können die Kabel beim Einführen des elektrischen Bauteils in die Öffnung der Tragestruktur stören.

Dokument WO 99/62144 A1 offenbart alle Merkmale der gekennzeichneten Teile der unabhängigen Ansprüche.

Der Erfindung liegt die Aufgabe zugrunde, ein elektrisches Bauteil sowie ein Verfahren zum Herstellen eines elektrischen Bauteils vorzustellen, so dass das elektrische Bauteil gut in eine Öffnung einer Tragestruktur eingeführt werden kann. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen elektrischen Bauteil sind die erste Austrittsöffnung und die zweite Austrittsöffnung relativ zu einer Umfangsfläche des Gehäuses zurückversetzt. Zwischen der ersten Austrittsöffnung und der zweiten Austrittsöffnung ist ein Gehäusesteg angeordnet.

Ein solches elektrisches Bauteil kann so gestaltet werden, dass die Umfangsfläche des Gehäuses an eine Öffnung in einer Tragestruktur angepasst ist. Indem die Austrittsöffnungen für die Kabel gegenüber der Umfangsfläche zurückversetzt sind, können die Kabel bei der Montage so geführt sein, dass sie beim Einsetzen des elektrischen Bauteils in die Tragestruktur nicht über die Umfangsfläche des Gehäuses hinausragen und deswegen das Einsetzen nicht behindern. Beispielsweise können die aus den Austrittsöffnungen herausragenden Teile der Kabel so umgelenkt werden, dass sie in Einführrichtung weisen.

Der Rückversatz der Austrittsöffnungen gegenüber der Umfangsfläche ist vorzugsweise wenigstens so groß wie der Durchmesser eines Kabels. Ein aus der Austrittsöffnung herausgeführtes Kabel kann dann so umgelenkt werden, dass es nicht über die Umfangsfläche hinausragt. In einer Ausführungsform ist der Rückversatz der Austrittsöffnungen gegenüber der Umfangsfläche wenigstens so groß wie die Summe der Durchmesser von zwei Kabeln, deren Austrittsöffnungen in Einführrichtung hintereinander angeordnet sind. Zwei Austrittsöffnungen sind in diesem Sinne in Einführrichtung hintereinander angeordnet, wenn es eine in Einführrichtung ausgerichtete Gerade gibt, die beide Austrittsöffnungen schneidet. Bei einem so bemessenen Rückversatz ist es möglich, zwei Kabel nebeneinander umzulenken, ohne dass die Kabel über die Umfangsfläche hinausragen.

Die Tragestruktur kann eine Außenfläche aufweisen, die benachbart ist zu der für das elektrische Bauteil bestimmten Öffnung. Die Außenfläche kann sich abschnittsweise oder als durchgehende Fläche um die Öffnung herum erstrecken. Die Au-βenfläche kann mit der Achse der Öffnung einen rechten Winkel einschließen.

Das elektrische Bauteil kann eine Auflagefläche umfassen, die dazu bestimmt ist auf der Außenfläche der Tragestruktur aufzulegen. Die Auflagefläche kann einen rechten Winkel einschließen mit der Einführrichtung, in der das elektrische Bauteil in die Öffnung der Tragestruktur eingeführt wird. Relativ zu der Umfangsfläche kann die Auflagefläche in radialer Richtung (bezogen auf die Einführrichtung) vorspringen. Damit wird es möglich, dass die Umfangsfläche in die Öffnung eingeführt wird, während die Auflagefläche um den Umfang der Öffnung herum auf der Tragestruktur aufliegt. Das elektrische Bauteil kann so gestaltet sein, dass die Öffnung der Tragestruktur durch eine Außenfläche des elektrischen Bauteils vollständig verschlossen ist, wenn die Auflagefläche des elektrischen Bauteils auf der Tragestruktur aufliegt.

Die Auflagefläche kann mit ein oder mehreren Befestigungseinrichtungen versehen sein, über die das elektrische Bauteil an der Tragestruktur befestigt werden kann. Die Befestigungseinrichtungen können beispielsweise die Form von Bohrungen haben, durch die eine Schraubverbindung sich hindurch erstreckt. In einer Ausführungsform werden Schrauben durch die Bohrungen hindurchgeführt und in ein Gewinde der Tragestruktur eingeschraubt. Zwischen der Auflagefläche und der Tragestruktur kann eine Dichtung angeordnet sein, die sich vorzugsweise ohne Unterbrechung über den Umfang des elektrischen Bauteils erstreckt. Damit kann das Eindringen von Wasser in den Innenraum der Tragestruktur verhindert werden.

Die Umfangsfläche des elektrischen Bauteils kann senkrecht zu der Auflagefläche ausgerichtet sein und/oder parallel zu der Einführrichtung ausgerichtet sein. In einer Ausführungsform verjüngt die Umfangsfläche sich in Einführrichtung, wodurch das Einführen des elektrischen Bauteils in die Öffnung der Tragestruktur erleichtert werden kann.

Die erste Austrittsöffnung und/oder die zweite Austrittsöffnung können in Richtung der Umfangsfläche weisen, so dass ein Kabel, das durch eine Austrittsöffnung hindurchgeführt ist und sich geradlinig in Verlängerung der Austrittsöffnung erstreckt, über die Umfangsfläche hinausragen würde. Durch Umlenken des Kabels in Einführrichtung kann erreicht werden, dass das Kabel für die Montage nicht über eine von der Umfangsfläche aufgespannte Kontur des elektrischen Bauteils hinausragt.

Üblicherweise werden derartige elektrische Bauteile aus einem Gehäuse und einer Vergussmasse erzeugt. Somit erreicht man Dichtigkeit gegen Umwelteinflüsse. Allerdings bedeutet diese mehrlagige Kabelführung erheblichen Mehraufwand in der Werkzeuggestaltung um die Kontur aufzunehmen und gegen die Vergussmasse abzudichten. Weiter ist das Einlegen je Verguss-Schuss komplexer, mit mehr Zeit verbunden und fehleranfälliger.

Das elektrische Bauteil kann so gestaltet sein, dass die erste Austrittsöffnung durch den Gehäusesteg und ein Gehäuse-Vorderteil gebildet wird. Der Gehäusesteg kann zum Abdichten einer ersten Kabellage und zur Aufnahme einer zweiten Kabellage dienen. Das elektrische Bauteil ist so gestaltet, dass die zweite Austrittsöffnung durch den Gehäusesteg und eine Vergussmasse gebildet wird. Als Gehäusesteg wird ein Element bezeichnet, das während der Montage
des elektrischen Bauteils als separates Teil vorliegt, wenigstens als von dem Gehäuse-Vorderteil und der Vergussmasse separates Teil. Im fertigen Zustand des elektrischen Bauteils kann der Gehäusesteg in die Vergussmasse aufgenommen sein oder wenigstens an die Vergussmasse angrenzen.

Der Gehäusesteg und/oder das Gehäuse-Vorderteil können mit einer Positionierhilfe ausgestattet sein, so dass durch die Positionierhilfe eine definierte Position des Gehäusestegs relativ zu dem Gehäuse-Vorderteil vorgegeben ist. Die Positionierhilfe kann beispielsweise einen Montage-Pin umfassen, der in eine Bohrung eingreift. In einer Ausführungsform ist der Montage-Pin an dem Gehäuse-Vorderteil angeordnet, und ist der Gehäusesteg mit dazu passenden Bohrungen ausgestattet. Auch die umgekehrte Gestaltung ist möglich. Wenn der Gehäusesteg in einer definierten Position ist, ist es einfacher, ein Gusswerkzeug so an den Gehäusesteg heranzuführen, dass kein Gussmaterial austreten kann.

Das elektrische Bauteil kann einen ersten Satz von Kabeln und einen zweiten Satz von Kabeln umfassen. Die Kabel des ersten Satzes von Kabeln können entlang einer Umfangsrichtung des elektrischen Bauteils hintereinander angeordnet sein. Gleiches kann für die Kabel des zweiten Satzes von Kabeln gelten. Als Umfangsrichtung wird die Richtung bezeichnet, in der sich die Umfangsfläche um den Innenraum des Gehäuses herum erstreckt. Mit anderen Worten können der erste und zweite Satz von Kabeln jeweils eine Kabellage bilden.

Der erste Satz von Kabeln und der zweite Satz von Kabeln können in Einführrichtung hintereinander angeordnet sein. Dies bedeutet, dass es eine in Einführrichtung ausgerichtete Gerade gibt, die von einem Kabel des ersten Satzes ausgeht und den zweiten Kabelsatz schneidet. Vorzugsweise gilt dies für wenigstens die Hälfte der Kabel des ersten Satzes, weiter vorzugsweise für alle Kabel des ersten Satzes.

Für jedes der Kabel der beiden Kabelsätze kann in dem Gehäuse des elektrischen Bauteils eine Austrittsöffnung ausgebildet sein. Die Achsen der Austrittsöffnungen können parallel zueinander ausgerichtet sein. Zusätzlich oder alternativ dazu können die Achsen der Austrittsöffnungen mit der jeweiligen lokalen Umfangsrichtung einen rechten Winkel einschließen.

Der Gehäusesteg kann zwischen dem ersten Satz von Kabeln und dem zweiten Satz von Kabeln angeordnet sein. Der Gehäusesteg kann sich entlang einer von den Austrittsöffnungen aufgespannten Fläche erstrecken. Eine oder mehrere Austrittsöffnungen können am Übergang zwischen dem Gehäusesteg und einem Gehäuse-Vorderteil des elektrischen Bauteils angeordnet sein. Dies bedeutet, dass eine die Austrittsöffnung umgebende Fläche teilweise von dem Gehäusesteg und teilweise von dem Gehäuse-Vorderteil gebildet wird. Insbesondere können alle Austrittsöffnungen des ersten Satzes von Kabeln am Übergang zwischen dem Gehäusesteg und dem Gehäuse-Vorderteil angeordnet sein. Bei den Austrittsöffnungen des zweiten Satzes von Kabeln muss dies nicht der Fall sein. Die Austrittsöffnungen des zweiten Satzes von Kabeln können so angeordnet sein, dass sie durch den Gehäusesteg begrenzt sind, nicht aber durch das Gehäuse-Vorderteil.

Das elektrische Bauteil kann ein Gehäuse-Vorderteil umfassen, an dem die Auflagefläche und/oder die Umfangsfläche ausgebildet sind. In einer Ausführungsform wird eine aus dem Gehäuse-Vorderteil, dem Gehäusesteg und/oder den Kabeln gebildet Einheit mit einer Vergussmasse vergossen, um das Gehäuse des elektrischen Bauteils zu vervollständigen. Als Vergussmasse kommen beispielsweise ein Kunststoff oder ein Gießharz infrage, die in flüssigem Zustand in das Gehäuse eingebracht werden und dort aushärten. Damit kann das elektrische Bauteil vor Schäden durch eindringende Feuchtigkeit oder mechanische Belastungen geschützt werden.

Zum Vergießen des Gehäuses kann ein Gussform-Teil verwendet werden, das auf das Gehäuse-Vorderteil aufgesetzt wird. Das Gussform-Teil kann mit dem Gehäuse-Vorderteil einen Hohlraum bilden, der mit der Vergussmasse ausgefüllt wird. Nicht ganz einfach ist es, im Bereich der Austrittsöffnungen und der Kabel eine hinreichende Abdichtung zwischen dem Gussform-Teil und dem Gehäuse-Vorderteil zu erreichen, so dass ein Austritt von Gussmaterial in diesem Bereich verhindert wird. Ein wesentliches Element der Erfindung ist in diesem Zusammenhang der zwischen den Austrittsöffnungen angeordnete Gehäusesteg. Der Gehäusesteg kann mit dem Gehäuse-Vorderteil Austrittsöffnungen bilden, die eng am Umfang der Kabel anliegen, so dass das Gehäuse in diesem Bereich dicht ist. Der zweite Satz von Kabeln kann auf der gegenüberliegenden Seite des Gehäusestegs aufliegen, so dass die Grenzfläche zu dem Gussform-Teil durch die Kabel und die dazu benachbarten Abschnitte des Gehäusestegs gebildet wird. Das Gussform-Teil kann so gestaltet sein, dass es mit den Kabeln des zweiten Satzes von Kabeln und den betreffenden Abschnitten des Gehäusestegs abgedichtet, um einen unerwünschten Austritt von Gussmaterial auch in diesem Bereich zu verhindern.

Für eine gute Abdichtung ist es von Vorteil, wenn das Gussform-Teil auf den Kabeln und dem Gehäusesteg aufliegen kann. Der mit dem Gussmaterial gebildete Teil des Gehäuses kann deswegen leicht gegenüber dem von dem Gehäusesteg gebildeten Teil der Umfangsfläche zurückversetzt sein.

Das erfindungsgemäße elektrische Bauteil kann als Steckverbinder ausgestaltet sein. Innerhalb des Steckverbinders kann eine elektrische Verbindung zwischen einem oder mehreren Kabeln sowie einem oder mehreren Steckkontakten gebildet sein. Die Steckkontakte können in einer Außenfläche des elektrischen Bauteils angeordnet sein, die für einen Nutzer zugänglich ist, wenn das elektrische Bauteil in einer Tragestruktur eingesetzt ist.

Die Erfindung betrifft außerdem eine Tragestruktur, in der eine Öffnung ausgebildet ist, wobei in die Öffnung ein erfindungsgemäßes elektrisches Bauteil eingesetzt ist. Die Tragestruktur kann beispielsweise ein Antriebsgehäuse eines Elektrofahrrads sein. Das elektrische Bauteil kann einen Flansch umfassen, durch den ein in dem Antriebsgehäuse angeordneter Gehäusekörper des elektrischen Bauteils von einer Au-βenseite des elektrischen Bauteils getrennt wird. Die Auflagefläche, mit der das elektrische Bauteil auf dem Antriebsgehäuse aufliegt, kann an dem Flansch ausgebildet sein.

Die Auflagefläche kann eine umlaufende Dichtfläche bilden, die dazu ausgelegt ist, mit der Tragestruktur abzudichten. In der Auflagefläche des elektrischen Bauteils können Bohrungen ausgebildet sein, über die das elektrische Bauteil mit der Tragestruktur verbunden wird. Die umlaufende Dichtfläche kann eine ununterbrochene Dichtstrecke bilden, die sich über den Umfang des Steckverbinders erstreckt und die peripher zu den Bohrungen angeordnet sein kann. Der Steckverbinder kann eine Dichtung umfassen, die sich entlang der Dichtfläche erstreckt und die vorzugsweise auch die Bohrungen umgreift.

Wenn das elektrische Bauteil ein Steckverbinder ist, können die Steckkontakte des Steckverbinders dazu ausgelegt sein, den Antrieb des Elektrofahrrads mit elektrischer Energie zu versorgen, um Peripheriegeräte zu versorgen und/oder um Signale mit Peripheriegeräten auszutauschen. Die Peripheriegeräte können die Sensorik und/oder Teile des HMI (Human Interface) betreffen. Zu den Peripheriegeräten können beispielsweise ein Energiespeicher des Antriebs, eine Beleuchtung des Elektrofahrrads, ein Display, ein Getriebeschalter, ein Geschwindigkeitssensor und/oder einer Anzeige für den Ladezustand des Energiespeichers gehören. Die Steckkontakte des Steckverbinders können beispielsweise die Funktion einer Spannungsversorgung, eines Masseanschlusses und/oder eines Datenbusses übernehmen.

Das erfindungsgemäße elektrische Bauteil findet Anwendung in einem Elektrofahrrad. Die Kabel des elektrischen Bauteils können mit Anschlüssen des Antriebs des Elektrofahrrads verbunden sein. Die Verbindung kann so gestaltet sein, dass sie im bestimmungsgemäßen Betrieb vom Benutzer nicht getrennt wird. Die Steckkontakte des elektrischen Bauteils können für den Nutzer zugänglich sein, so dass im bestimmungsgemäßen Betrieb Stecker aufgesteckt bzw. getrennt werden können.

Die Erfindung betrifft außerdem ein Verfahren zum Herstellen eines elektrischen Bauteils, bei dem ein Gehäusesteg so positioniert wird, dass ein erstes Kabel zwischen dem Gehäusesteg und einem Gehäusevorderteil angeordnet ist und dass ein zweites Kabel auf dem Gehäusesteg aufliegt. Ein Gussmaterial wird durch Vergießen so aufgebracht, dass das zweite Kabel zwischen dem Gussmaterial und dem Gehäusesteg eingeschlossen ist.

Beim Vergießen kann der Gehäusesteg durch ein Vergusswerkzeug gegen das erste Kabel gedrückt werden, so dass der Gehäusesteg vergussdicht mit dem ersten Kabel abschließt. Auf die gleiche Weise kann auch der Übergang zwischen dem ersten Kabel und dem Gehäuse-Vorderteil vergussdicht abgeschlossen werden. Ohne vergussdichten Abschluss könnte das Gussmaterial beim Vergießen an dieser Stelle aus dem Innenraum des Gehäuses austreten, was unerwünscht ist.

Das Verfahren kann mit weiteren Merkmalen fortgebildet werden, die im Zusammenhang des erfindungsgemäßen elektrischen Bauteils beschrieben sind. Das elektrische Bauteil kann mit weiteren Merkmalen fortgebildet werden, die Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: ein mit einem erfindungsgemäßen elektrischen Bauteil ausgestattetes Elektrofahrrad;
- Fig. 2:: eine perspektivische Ansicht eines erfindungsgemäßen elektrischen Bauteils;
- Fig. 3:: eine Ansicht von oben auf das elektrische Bauteil aus Fig. 2;
- Fig. 4:: einen Schnitt entlang Linie B-B in Fig. 3;
- Fig. 5:: einen Schnitt entlang Linie A-A in Fig. 3;
- Fig. 6:: eine Seitenansicht eines erfindungsgemäßen elektrischen Bauteils;
- Fig. 7:: einen Schnitt entlang Linie C-C in Fig. 6;
- Fig. 8:: einen Ausschnitt aus Fig. 7 in vergrößerter Darstellung;

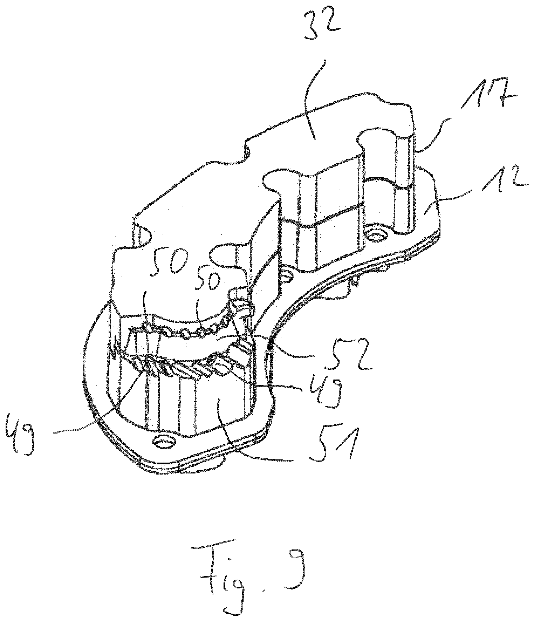

- Fig. 9:: eine weitere perspektivische Ansicht des Steckverbinders aus Fig. 2;
- Fig. 10:: eine Explosionsansicht eines erfindungsgemäßen Steckverbinders;
- Fig. 11:: ein Detail aus Fig. 10 bei einer alternativen Ausführungsform der Erfindung;
- Fig. 12:: einen Ausschnitt aus einer Tragestruktur mit einer darin eingesetzten Steckverbinder.

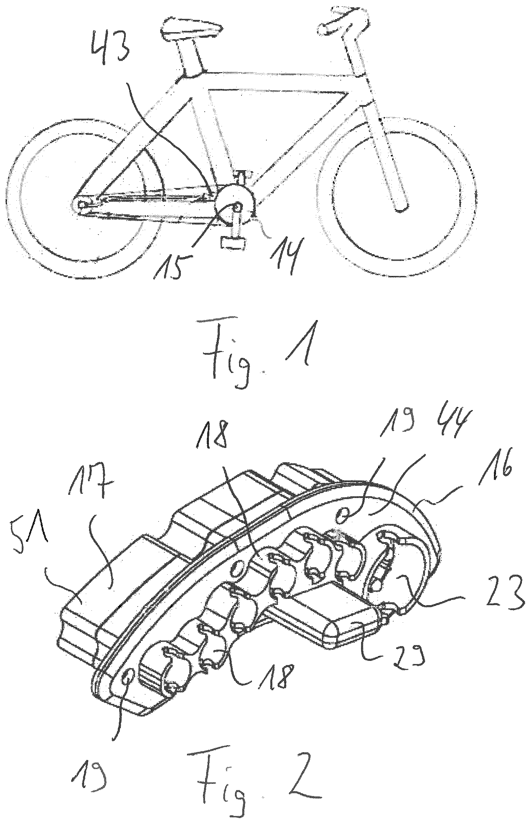

Ein in Fig. 1 gezeigtes Elektrofahrrad umfasst einen Elektroantrieb, der nahe dem Tretlager 14 des Elektrofahrrads angeordnet ist. Der Elektroantrieb unterstützt die Tretkurbelwelle 15 während der Fahrt, wenn zusätzliche Energie zur Beschleunigung oder bei Steigungen benötigt wird. Wenn keine Energie benötigt wird, nimmt er zusätzliche Energie auf, die zum Beispiel durch Bremsmanöver frei werden kann.

Das erfindungsgemäße elektrische Bauteil in Form eines Steckverbinders bildet die Schnittstelle zwischen dem Elektroantrieb und mit dem Elektroantrieb verbundenen Peripheriegeräten. Zu den Peripheriegeräten gehört beispielsweise ein Akku, über den der Elektroantrieb mit Energie versorgt wird. Weiterhin gehören zu den Peripheriegeräten Sensorelemente sowie Elemente des HMI (Human Interface). Solche Peripheriegeräte sind beispielsweise die Beleuchtung, ein Geschwindigkeitssensor, ein Display, ein Getriebeschalter. Der Nutzer kann einen Stecker in den Steckverbinder einstecken, um das Peripheriegerät anzuschließen, oder den Stecker aus dem Steckverbinder herausziehen, um das Peripheriegerät zu trennen. Zur Versorgung der Peripheriegeräte und zur Kommunikation mit den Peripheriegeräten sind typischerweise eine Spannungsversorgung, ein Masseanschluss und/oder eine oder mehrere Datenbusleitungen erforderlich. Der Steckverbinder ist mit einem Steckkontakt 22 für jeden der elektrischen Wege ausgestattet.

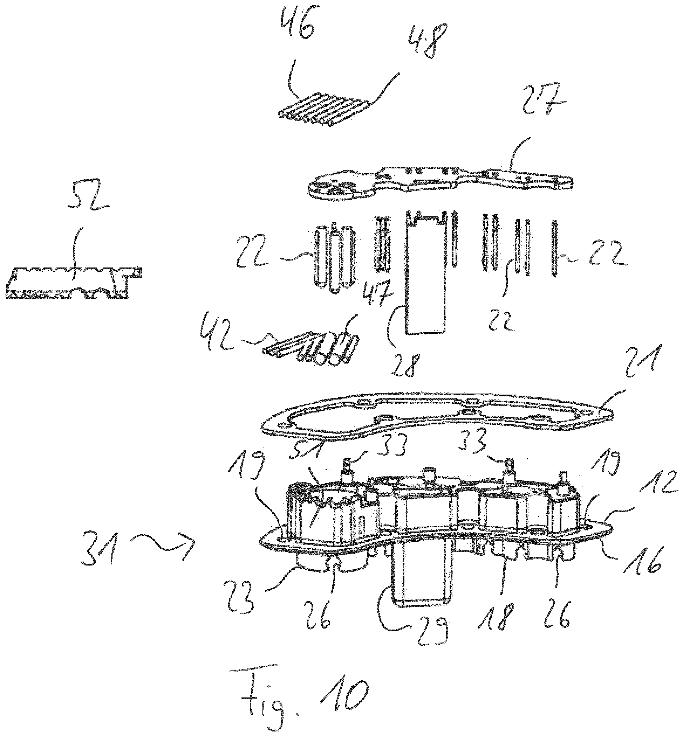

Gemäß Fig. 2 hat der Steckverbinder eine Form, die an die abgerundete Kontur des Elektroantriebs angepasst ist. Ein Flansch 16 des Steckverbinders liegt über eine Auflagefläche 12 auf dem Antriebsgehäuse auf, wobei das Antriebsgehäuse eine Tragestruktur 43 im Sinne der Erfindung bildet. Ein Körper 17 des Steckverbinders ragt, durch eine Öffnung in der Tragestruktur 43 hindurch in den Innenraum des Antriebsgehäuses hinein. Die Außenseite 44 des Steckverbinders, die mit einer Mehrzahl von Steckeraufnahmen 18, 23 versehen ist, weist nach außen und ist für den Nutzer zugänglich. Der Flansch 16 ist mit einer Mehrzahl von Bohrungen 19 versehen, über die der Steckverbinder an der Tragestruktur 43 festgeschraubt ist. Die Bohrungen 19 sind in der Auflagefläche 12 des Flanschs 16 angeordnet. Eine Dichtung 21 liegt auf der Auflagefläche 12 auf und bildet eine außerhalb der Bohrungen 19 angeordnete ununterbrochene Dichtstrecke, die sich über den gesamten Umfang des Steckverbinders erstreckt. Die Bohrungen 19 werden von der Dichtung 21 umfasst, so dass die Befestigungsschrauben, mit denen der Steckverbinder an dem Antriebsgehäuse befestigt ist, sich durch die Dichtung 21 hindurch erstrecken, siehe Fig. 10.

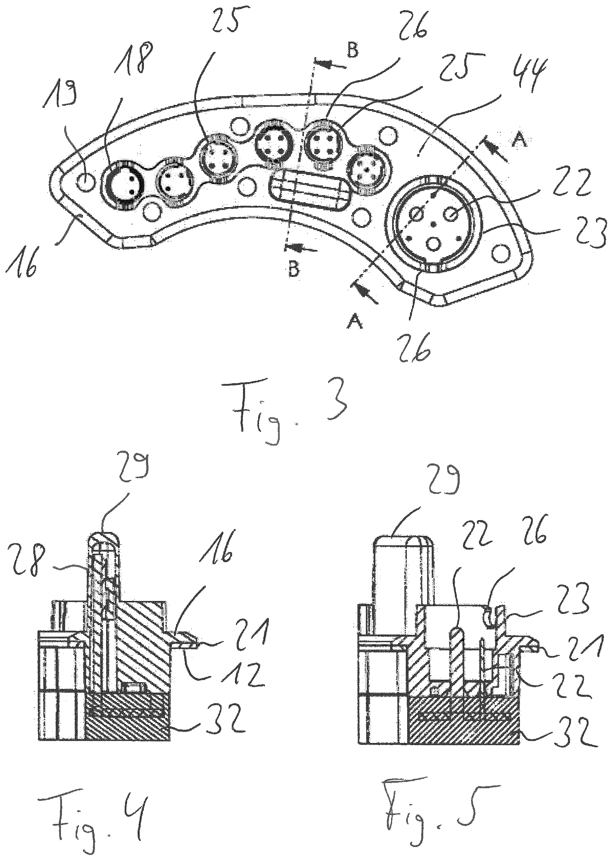

Der Steckverbinder umfasst gemäß Fig. 3 sechs Steckeraufnahmen 18 mit gleichem Durchmesser und eine Steckeraufnahme 23 mit größerem Durchmesser. Die Steckeraufnahme 23 dient der Stromversorgung und wird an die Batterie angeschlossen. Die Steckeraufnahmen 18 dienen dem Anschluss der verschiedenen Peripheriegeräte. Die Steckeraufnahmen 18 sind durch peripher zu den Steckkontakten 22 angeordnete Strukturen 25 codiert, so dass jeder Stecker in genau einer einzigen Winkelstellung in eine bestimmte Steckeraufnahme 18 passt. Jeweils am Umfang der Steckeraufnahmen 18, 23 ist eine Einraststruktur 26 ausgebildet, in die ein Vorsprung des Steckers einrasten kann, um ein unbeabsichtigtes Lösen des Steckers zu verhindern.

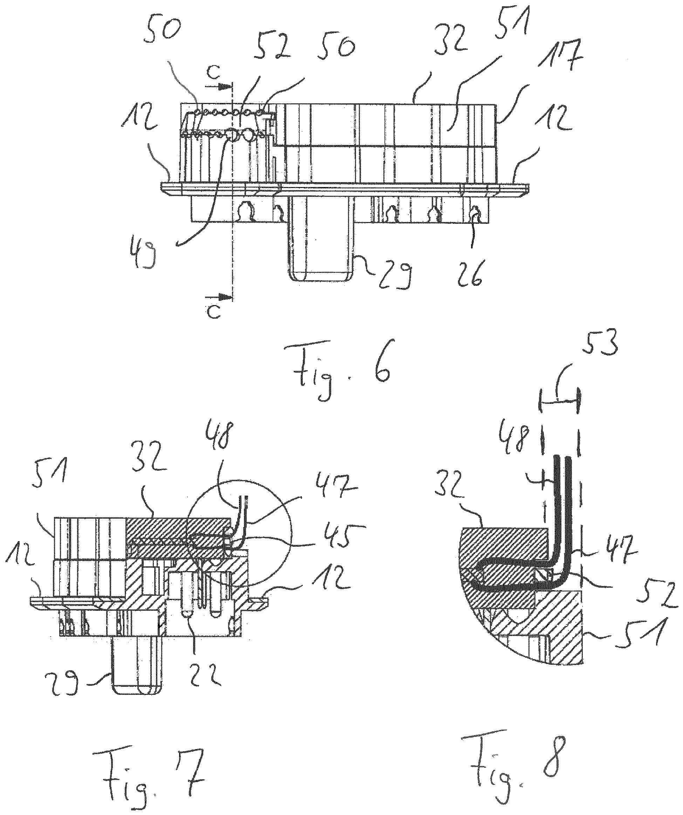

Gemäß Fig. 4, 5, 10 ist im Inneren des Steckverbinders eine Platine 27 angeordnet, mit der die Steckkontakte 22 in passenden Positionen verlötet sind. Die Steckkontakte 22 sind im zusammengesetzten Zustand des Steckverbinders durch Bohrungen in einem Gehäuse-Vorderteil 31 des Steckverbinders hindurchgeführt, so dass die Steckkontakte 22 wie in Fig. 6 gezeigt in die Steckeraufnahmen 18, 23 hineinragen. Außerdem ist mit der Platine 27 ein Bluetooth-Modul 28 verbunden, das im zusammengesetzten Zustand des Steckverbinders in einem Gehäusevorsprung 29 untergebracht ist. Darüber hinaus kann die Platine 27 mit weiteren elektrischen oder elektronischen Bauteilen ausgestattet sein, wie beispielsweise LEDs, Spulen und ähnlichem.

Über die Platine 27 wird ein elektrischer Kontakt hergestellt zwischen den Steckkontakten 22 und Kabeln 47, 48, die über eine Umfangsfläche 51 des Gehäuses nach außen geführt sind. In dem Gehäuse sind Austrittsöffnungen 49, 50 ausgebildet, durch die die Kabel 47, 48 hindurchgeführt sind. Die Austrittsöffnungen 49, 50 sind gegenüber der Umfangsfläche um einen Versatz 53 zurückversetzt, wie Fig. 8 am besten zeigt. Die Kabel 47, 48 können bei den Austrittsöffnungen 49, 50 nach oben umgelenkt werden (bezogen auf die Darstellung in Fig. 8), so dass die Kabel 47, 48 nicht über die von der Umfangsfläche 51 aufgespannte Kontur hinausragen. Der Körper des elektrischen Bauteils kann zusammen mit den Kabeln 47, 48 durch die Öffnung der Tragestruktur hindurchgeführt werden, ohne dass die Kabel 47, 48 dies behindern. Die Umfangsfläche 51 kann mit einem Montagespalt oder direkt an der Öffnung der Tragestruktur anliegen.

Die Kabel 47 bilden einen ersten Satz 42 von Kabeln, die Kabel 48 bilden einen zweiten Satz 46 von Kabeln. In Einführrichtung, in der das elektrische Bauteil in die Öffnung der Tragestruktur 43 eingesetzt wird, sind die Sätze 42, 46 von Kabeln hintereinander angeordnet. Der erste Satz 42 von Kabeln ist durch einen ersten Satz von Austrittsöffnungen 49 geführt, der zweite Satz 46 von Kabeln ist durch einen zweiten Satz von Austrittsöffnungen 50 hindurchgeführt. Die Austrittsöffnungen 49, 50 sind soweit gegenüber der Umfangsfläche 51 zurückversetzt, dass zwei Kabel 47, 48 parallel zueinander umgelenkt werden können, ohne dass die Kabel 47, 48 über die Umfangsfläche 51 hinausragen, siehe Fig. 8.

Der erfindungsgemäße Gehäusesteg 52 ist zwischen dem ersten Satz 42 und dem zweiten Satz 46 von Kabeln angeordnet. Der Gehäusesteg 52 bildet mit dem Gehäuse-Vorderteil 31 den ersten Satz von Austrittsöffnungen 49 und bildet mit dem Gussmaterial 32 den zweiten Satz von Austrittsöffnungen 50.

Das Verfahren zum Herstellen des erfindungsgemäßen elektrischen Bauteils wird anhand von Fig. 10 erläutert. Das Gehäuse-Vorderteil 31 ist mit Rastvorsprüngen 33 versehen, die den Umfang der Platine 27 umgreifen und die Platine 27 so in der passenden Position relativ zu dem Gehäuse-Vorderteil 31 halten. Nachdem das Gehäuse-Vorderteil 31 mit der Platine 27 bestückt wurde, wird der erste Satz 42 von Kabeln 47 in die Aussparungen des Gehäuse-Vorderteils 31 eingelegt, die später einen Teil des ersten Satzes von Austrittsöffnungen 49 bilden.

Der Gehäusesteg 52 wird zwischen dem ersten Satz 42 von Kabeln 47 und dem zweiten Satz 46 von Kabeln 48 positioniert, so dass eine Seite des Gehäusestegs 52 gemeinsam mit dem Gehäuse-Vorderteil 31 den ersten Satz von Austrittsöffnungen 49 bildet. Der zweite Satz 46 von Kabeln wird in die Aussparungen an der gegenüberliegenden Seite des Gehäusestegs 52 eingelegt.

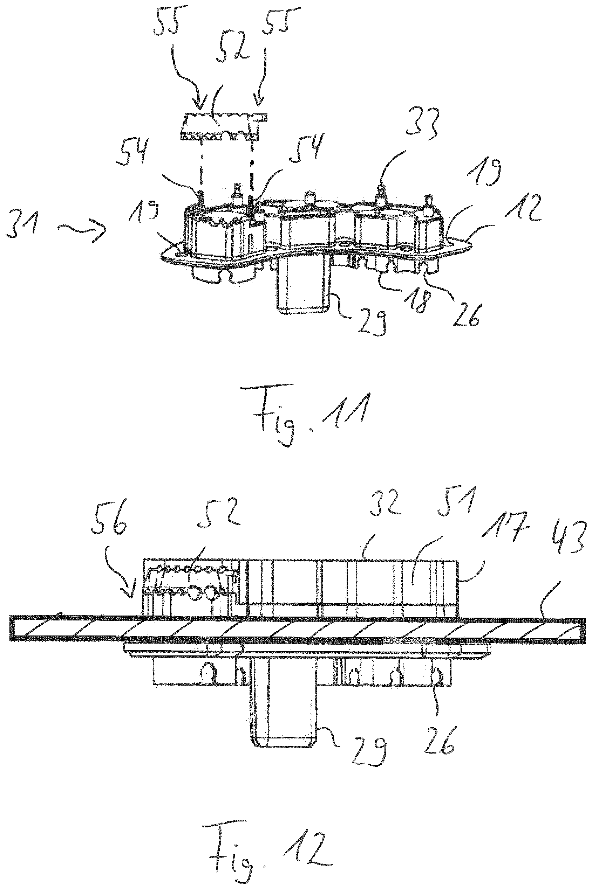

Bei der alternativen Ausführungsform gemäß Fig. 11 ist das Gehäuse-Vorderteil 31 mit Montage-Pins 54 ausgestattet. Der Gehäusesteg 52 hat Bohrungen 55, die in einem zu den Montage-Pins 54 passenden Abstand zueinander angeordnet sind und die als Positionierhilfen dienen. Beim Aufsetzen des Gehäusestegs 52 auf das Gehäuse-Vorderteil 31 werden die Montage-Pins 54 in die Bohrungen 55 eingeführt, so dass der Gehäusesteg 52 eine definierte Position relativ zu dem Gehäuse-Vorderteil 31 einnimmt.

Ein Gussform-Teil wird an das Gehäuse-Vorderteil 31 herangeführt, so dass das Gussform-Teil mit dem Gehäuse-Vorderteil 31 einen abgeschlossenen Innenraum bildet. Ein Abschnitt der Grenzfläche zwischen dem Gehäuse und dem Gussform-Teil wird durch den zweiten Satz 46 von Kabeln und die dazu benachbarten Abschnitte des Gehäusestegs 52 gebildet. Der damit rundherum abgeschlossene Innenraum wird mit einem Kunststoffmaterial in flüssiger Form gefüllt. Das Kunststoffmaterial härtet aus und bildet damit den verbleibenden Teil des Gehäuses des erfindungsgemäßen elektrischen Bauteils.

Die Fig. 12 zeigt einen Steckverbinder, der in eine Öffnung einer Tragestruktur 43 eingesetzt ist.

## Patentansprüche

1. Elektrisches Bauteil mit einem Gehäuse (31, 32), das eine erste Austrittsöffnung (49) und eine zweite Austrittsöffnung (50) aufweist, wobei durch die erste Austrittsöffnung (49) ein erstes Kabel (47) aus dem Innenraum des Gehäuses (31, 32) nach außen geführt ist und wobei durch die zweite Austrittsöffnung (50) ein zweites Kabel (48) aus dem Innenraum des Gehäuses (31, 32) nach außen geführt ist, wobei die erste Austrittsöffnung (49) und die zweite Austrittsöffnung (50) relativ zu einer Umfangsfläche (51) des Gehäuses (31, 32) zurückversetzt sind und wobei zwischen der ersten Austrittsöffnung (49) und der zweiten Austrittsöffnung (50) ein Gehäusesteg (52) angeordnet ist, **dadurch gekennzeichnet, dass** die zweite Austrittsöffnung (50) durch den Gehäusesteg (52) und eine Vergussmasse gebildet wird.

2. Elektrisches Bauteil nach Anspruch 1, **dadurch gekennzeichnet, dass** die erste Austrittsöffnung (49) und/oder die zweite Austrittsöffnung (50) um eine Strecke (53) gegenüber der Umfangsfläche (51) zurückversetzt sind, die größer ist als die Summe der Durchmessers des ersten Kabels (48) und des zweiten Kabels (49).

3. Elektrisches Bauteil nach Anspruch 1 oder 2, **dadurch gekennzeichnet, dass** die erste Austrittsöffnung (49) und/oder die zweite Austrittsöffnung (50) in Richtung der Umfangsfläche (51) weisen.

4. Elektrisches Bauteil nach einem der Ansprüche 1 bis 3,
**dadurch gekennzeichnet, dass** das erste Kabel (47) und/oder das zweite Kabel (48) nach dem Austritt aus den Austrittsöffnungen (49, 50) so umgelenkt sind, dass die Kabel (47, 48) nicht über eine von der Umfangsfläche (51) aufgespannte Kontur hinausragen.

5. Elektrisches Bauteil nach einem der Ansprüche 1 bis 4,
**dadurch gekennzeichnet, dass** die erste Austrittsöffnung (49) durch den Gehäusesteg (52) und ein Gehäuse-Vorderteil (31) gebildet wird.

6. Elektrisches Bauteil nach einem der Ansprüche 1 bis 5,
**dadurch gekennzeichnet, dass** der Gehäusesteg (52) zwischen einem ersten Satz (42) von Kabeln (47) und einem zweiten Satz (46) von Kabeln (48) angeordnet ist.

7. Elektrisches Bauteil nach einem der Ansprüche 1 bis 6,
**dadurch gekennzeichnet, dass** der Gehäusesteg (52) und/oder das Gehäuse-Vorderteil (31) mit einer Positionierhilfe (54, 55) ausgestattet sind, so dass durch die Positionierhilfe (54, 55) eine definierte Position der Gehäusestegs (52) relativ zu dem Gehäuse-Vorderteil (31) vorgegeben ist.

8. Elektrisches Bauteil nach einem der Ansprüche 1 bis 7,
**dadurch gekennzeichnet, dass** das elektrische Bauteil als Steckverbinder ausgestaltet ist, in dem die Kabel (47, 48) mit Steckkontakten (22) elektrisch gekoppelt sind.

9. Elektrisches Bauteil nach einem der Ansprüche 1 bis 8, **gekennzeichnet durch** eine Auflagefläche (12), die gegenüber der Umfangsfläche (51) vorspringt.

10. Elektrisches Bauteil nach Anspruch 9, **dadurch gekennzeichnet, dass** die Auflagefläche (12) mit Befestigungseinrichtungen (19) zum Befestigen des elektrischen Bauteils an einer Tragestruktur (43) versehen ist.

11. Elektrisches Bauteil nach Anspruch 9 oder 10, **dadurch gekennzeichnet, dass** die Auflagefläche (12) mit einer Dichtung (21) versehen ist.

12. Tragestruktur mit einer Öffnung (56), wobei in die Öffnung (56) ein elektrisches Bauteil nach einem der Ansprüche 1 bis 11 eingesetzt ist.

13. Verfahren zum Herstellen eines elektrischen Bauteils, bei dem ein Gehäusesteg (52) so positioniert wird, dass ein erstes Kabel (47) zwischen dem Gehäusesteg (52) und einem Gehäusevorderteil (31) angeordnet ist und dass ein zweites Kabel (48) auf dem Gehäusesteg (52) aufliegt, **dadurch gekennzeichnet, dass** ein Gussmaterial (32) aufgebracht wird, so dass das zweite Kabel (48) zwischen dem Gussmaterial (32) und dem Gehäusesteg (51) eingeschlossen ist.

14. Verfahren nach Anspruch 13, **dadurch gekennzeichnet, dass** beim Vergießen der Gehäusesteg (52) durch ein Vergusswerkzeug gegen das erste Kabel (47) gedrückt wird, so dass der Gehäusesteg (52) vergussdicht mit dem ersten Kabel (47) abschließt.

## Claims

1. Electrical component with a housing (31, 32) which has a first outlet opening (49) and a second outlet opening (50), a first cable (47) being routed out of the interior space of the housing (31, 32) through the first outlet opening (49) towards the outside, and a second cable (48) being routed out of the interior space of the housing (31, 32) through the second outlet opening (50) towards the outside, the first outlet opening (49) and the second outlet opening (50) being set back relative to a peripheral face (51) of the housing (31, 32), and a housing web (52) being arranged between the first outlet opening (49) and the second outlet opening (50), **characterized in that** the second outlet opening (50) is formed by way of the housing web (52) and a potting compound.

2. Electrical component according to Claim 1, **characterized in that** the first outlet opening (49) and/or the second outlet opening (50) are/is set back with respect to the peripheral face (51) by a distance (53) which is greater than the sum of the diameter of the first cable (48) and of the second cable (49).

3. Electrical component according to Claim 1 or 2, **characterized in that** the first outlet opening (49) and/or the second outlet opening (50) point/points in the direction of the peripheral face (51).

4. Electrical component according to one of Claims 1 to 3, **characterized in that** the first cable (47) and/or the second cable (48) are deflected after the exit from the outlet openings (49, 50) in such a way that the cables (47, 48) do not protrude beyond a contour which is defined by the peripheral face (51).

5. Electrical component according to one of Claims 1 to 4, **characterized in that** the first outlet opening (49) is formed by way of the housing web (52) and a housing front part (31).

6. Electrical component according to one of Claims 1 to 5, **characterized in that** the housing web (52) is arranged between a first set (42) of cables (47) and a second set (46) of cables (48).

7. Electrical component according to one of Claims 1 to 6, **characterized in that** the housing web (52) and/or the housing front part (31) are/is equipped with a positioning aid (54, 55), with the result that a defined position of the housing web (52) relative to the housing front part (31) is specified by way of the positioning aid (54, 55).

8. Electrical component according to one of Claims 1 to 7, **characterized in that** the electrical component is configured as a plug-in connector, in which the cables (47, 48) are coupled electrically by way of plug-in contacts (22).

9. Electrical component according to one of Claims 1 to 8, **characterized by** a supporting face (12) which projects with respect to the peripheral face (51).

10. Electrical component according to Claim 9, **characterized in that** the supporting face (12) is provided with fastening devices (19) for fastening the electrical component to a load-bearing structure (43).

11. Electrical component according to Claim 9 or 10, **characterized in that** the supporting face (12) is provided with a seal (21).

12. Load-bearing structure with an opening (56), an electrical component according to one of Claims 1 to 11 being inserted into the opening (56).

13. Method for producing an electrical component, in the case of which method a housing web (52) is positioned in such a way that a first cable (47) is arranged between the housing web (52) and a housing front part (31), and that a second cable (48) lies on the housing web (52), **characterized in that** a potting material (32) is applied, with the result that the second cable (48) is enclosed between the potting material (32) and the housing web (51) .

14. Method according to Claim 13, **characterized in that**, during potting, the housing web (52) is pressed against the first cable (47) by way of a potting die, with the result that the housing web (52) terminates in a potting-tight manner with the first cable (47).

## Revendications

1. Composant électrique pourvu d'un boîtier (31, 32) qui comporte une première ouverture de sortie (49) et une deuxième ouverture de sortie (50), un premier câble (47) étant guidé vers l'extérieur depuis l'intérieur du boîtier (31, 32) par la première ouverture de sortie (49) et un deuxième câble (48) étant guidé de l'intérieur du boîtier (31, 32) vers l'extérieur par la deuxième ouverture de sortie (50), la première ouverture de sortie (49} et la deuxième ouverture de sortie (50) étant en retrait par rapport à une surface périphérique (51) du boîtier (31, 32) et une nervure de boîtier (52) étant disposée entre la première ouverture de sortie (49) et la deuxième ouverture de sortie (50), **caractérisé en ce que** la deuxième ouverture de sortie (50) est formée par la nervure de boîtier (52) et une matière de scellement.

2. Composant électrique selon la revendication 1, **caractérisé en ce que** la première ouverture de sortie (49) et/ou la deuxième ouverture de sortie (50) sont en retrait par rapport à la surface périphérique (51) d'une distance (53) qui est supérieure à la somme des diamètres du premier câble (48) et du deuxième câble (49) .

3. Composant électrique selon la revendication 1 ou 2, **caractérisé en ce que** la première ouverture de sortie (49) et/ou la deuxième ouverture de sortie (50) sont orientées en direction de la surface périphérique (51) .

4. Composant électrique selon l'une des revendications 1 à 3, **caractérisé en ce que** le premier câble (47) et/ou le deuxième câble (48) sont déviés après leur sortie des orifices de sortie (49, 50) de sorte que les câbles (47, 48) ne fassent pas saillie d'un contour passant par la surface périphérique (51).

5. Composant électrique selon l'une des revendications 1 à 4, **caractérisé en ce que** la première ouverture de sortie (49) est formée par la nervure de boîtier (52) et une partie avant de boîtier (31).

6. Composant électrique selon l'une des revendications 1 à 5, **caractérisé en ce que** la nervure de boîtier (52) est disposée entre un premier ensemble (42) de câbles (47) et un deuxième ensemble (46) de câbles (48).

7. Composant électrique selon l'une des revendications 1 à 6, **caractérisé en ce que** la nervure de boîtier (52) et/ou la partie avant de boîtier (31) sont conçues avec un auxiliaire de positionnement (54, 55) de sorte que l'auxiliaire de positionnement (54, 55) spécifie une position définie de la nervure de boîtier (52) par rapport à la partie avant de boîtier (31) .

8. Composant électrique selon l'une des revendications 1 à 7, **caractérisé en ce que** le composant électrique est conçu sous la forme d'un connecteur enfichable dans lequel les câbles (47, 48) sont couplés électriquement à des contacts enfichables (22) .

9. Composant électrique selon l'une des revendications 1 à 8, **caractérisé par** une surface d'appui (12) qui fait saillie de la surface périphérique (51).

10. Composant électrique selon la revendication 9, **caractérisé en ce que** la surface d'appui (12) est munie de dispositifs de fixation (19) destinés à fixer le composant électrique à une structure porteuse (43).

11. Composant électrique selon la revendication 9 ou 10, **caractérisé en ce que** la surface d'appui (12) est munie d'une garniture d'étanchéité (21).

12. Structure porteuse pourvue d'une ouverture (56), un composant électrique selon l'une des revendications 1 à 11 étant inséré dans l'ouverture (56).

13. Procédé de fabrication d'un composant électrique, dans lequel une nervure de boîtier (52) est positionnée de sorte qu'un premier câble (47) soit disposé entre la nervure de boîtier (52) et une partie avant de boîtier (31) et qu'un deuxième câble (48) vienne en appui sur la nervure de boîtier (52), **caractérisé en ce qu'**une matière de scellement (32) est appliquée de sorte que le deuxième câble (48) soit enfermé entre la matière de scellement (32) et la nervure de boîtier (51).

14. Procédé selon la revendication 13, **caractérisé en ce que** la nervure de boîtier (52) est pressée contre le premier câble (47) par un outil de scellement pendant le processus de scellement de sorte que la nervure de boîtier (52) se termine par le premier câble (47) avec un scellement étanche.
